# EUROPEAN PATENT APPLICATION

(11) **EP 4 679 037 A1**
(43) Date of publication of application: **14.01.2026**
(21) Application number: 24188422.0
(22) Date of filing: 12.07.2024
(51) Int. Cl.: G01C 25/00, G01C 19/00

(54) **INERTIAL MEASUREMENT UNIT ARRANGEMENT AND CALIBRATION THEREOF**

(71) Applicant: VOLVO TRUCK CORPORATION, 405 08 Göteborg (SE)
(72) Inventor: PANAHANDEH, Ghazaleh, 414 67 GÖTEBORG (SE)
(74) Representative: Ström & Gulliksson AB

(57) **Abstract**

An inertial measurement unit (IMU) arrangement is disclosed, which comprises a cluster of at least nine IMUs, wherein each of the IMUs has a respective angular orientation within the cluster, and wherein all respective angular orientations among the IMUs are different. For example, the respective angular orientations may collectively span a three-dimensional angle space.

A computer-implemented method for calibrating the IMU arrangement is also disclosed. The method comprises receiving a respective result of calibration measurements from each of the IMUs, wherein all the calibration measurements relate to a single angular orientation of the cluster, and causing calibration of at least one of the IMUs by using the respective results from different ones of the IMUs as if the corresponding calibration measurements related to different angular orientations of a single IMU.

Corresponding computer system, wheel, vehicle, computer program product, and non-transitory computer-readable storage medium are also disclosed.

## Description

### TECHNICAL FIELD

The disclosure relates generally to inertial measurement units (IMUs). In particular aspects, the disclosure relates to an IMU arrangement and calibration thereof. The disclosure can be applied to heavy-duty vehicles, such as trucks, buses, and construction equipment, among other vehicle types. Although the disclosure may be described with respect to a particular vehicle, the disclosure is not restricted to any particular vehicle. More generally, the disclosure may be applied to any scenario where an IMU is applicable.

### BACKGROUND

An inertial measurement unit (IMU) typically needs to be calibrated to provide appropriate measurement results. Also typically, the calibration may need to be repeated over time to adjust for changing conditions (e.g., temperature changes) which may affect the measurement results.

Many types of IMUs require more or less elaborate positioning patterns to be executed for the IMU to enable the calibration (i.e., performing a series of calibration measurements while repositioning the IMU). This is cumbersome since it may require manual positioning of the IMU or positioning of the IMU by specialized machinery. Thereby, IMU calibration may be restricted to locations where manual positioning of the IMU or positioning of the IMU by specialized machinery is available. Furthermore, any changing conditions occurring during use of the IMU (e.g., while a vehicle comprising the IMU is en route) cannot be accounted for by proper recalibration.

Therefore, there is a need for alternative IMU arrangements and corresponding calibration approaches.

### SUMMARY

According to a first aspect of the disclosure, an inertial measurement unit (IMU) arrangement is provided, which comprises a cluster of at least nine IMUs. Each of the IMUs has a respective angular orientation within the cluster, and all respective angular orientations among the IMUs are different. The first aspect of the disclosure may seek to provide an IMU arrangement which is configured to be calibrated in a less cumbersome manner than other IMU arrangements. A technical benefit may include that dynamic and/or automatic calibration is enabled. A technical benefit may include that calibration is not restricted to certain locations. A technical benefit may include that calibration can be performed without execution of elaborate positioning patterns.

Optionally in some examples, including in at least one preferred example, each of the IMUs may represent an instantiation of a same template IMU. A technical benefit may include that the calibration accuracy is improved.

Optionally in some examples, including in at least one preferred example, the respective angular orientations may collectively span a three-dimensional angle space. A technical benefit may include that calibration may include parameters pertaining to a full measurement space of the IMU arrangement.

According to a second aspect of the disclosure, a computer system is provided for calibration of the IMU arrangement of the first aspect. The computer system comprises processing circuitry configured to receive a respective result of calibration measurements from each of the IMUs, wherein all the calibration measurements relate to a single angular orientation of the IMU arrangement. The processing circuitry is also configured to cause calibration of at least one of the IMUs by using the respective results from different ones of the IMUs as if the corresponding calibration measurements related to different angular orientations of a single IMU. The second aspect of the disclosure may seek to facilitate IMU calibration. A technical benefit may include that dynamic and/or automatic calibration is enabled. A technical benefit may include that calibration is not restricted to certain locations. A technical benefit may include that calibration can be performed without execution of elaborate positioning patterns.

Optionally in some examples, including in at least one preferred example, the processing circuitry may be further configured to trigger the IMUs to perform the calibration measurements. A technical benefit may include improved calibration control.

Optionally in some examples, including in at least one preferred example, the processing circuitry may be configured to trigger the IMUs to perform the calibration measurements responsive to a trigger condition being fulfilled. A technical benefit may include that the calibration can be performed when needed and/or can be avoided when not needed.

Optionally in some examples, including in at least one preferred example, the trigger condition may comprise one or more of: a vehicle comprising the IMU arrangement being at standstill, a specific time having passed since a previous IMU calibration, a temperature change being detected, and an age of the IMU arrangement exceeding a threshold value. A technical benefit may include that suitable conditions for performing calibration are provided (e.g., conditions defining when calibration may be needed and/or when calibration may be performed with suitable accuracy).

Optionally in some examples, including in at least one preferred example, the processing circuitry may be further configured to estimate one or more calibration parameter(s). A technical benefit may include that the calibration is substantiated in terms of a parameter space.

Optionally in some examples, including in at least one preferred example, the processing circuitry may be configured to use a machine learning model and/or an extended Kalman filter to estimate the calibration parameter(s). A technical benefit may include that real-time adaptation of the calibration is enabled/improved. A technical benefit may include that fusion of measurement data for the calibration is enabled/improved. A technical benefit may include that non-linear modeling for the calibration is enabled/improved. A technical benefit may include that the calibration is robust. A technical benefit may include that the possibility to capture complex and/or non-linear relationships between measurements and calibration parameters is enabled/improved. A technical benefit may include that adaptation to previously unknown dynamics related to the calibration is enabled/improved.

According to a third aspect of the disclosure, a wheel for a vehicle is provided, wherein the wheel comprises the IMU arrangement of the first aspect. The third aspect of the disclosure may seek to provide a suitable (e.g., beneficial) placement of IMU. A technical benefit may include that the IMU arrangement is inherently very likely to have different orientations for different calibrations occasions, which may further improve the calibration accuracy.

According to a fourth aspect of the disclosure, a vehicle is provided, which comprises the IMU arrangement of the first aspect, and/or the computer system of the second aspect, and/or the wheel of the third aspect. The fourth aspect of the disclosure may seek to provide an IMU-equipped vehicle with improved calibration approaches. A technical benefit may include that the vehicle is not forced to certain locations for calibration. A technical benefit may include that the vehicle is not forced to undergo execution of elaborate positioning patterns for IMU-calibration. A technical benefit may include that IMU-calibration is automatically adjusted to dynamic changes while the vehicle is in use.

According to a fifth aspect of the disclosure, a computer-implemented method is provided for calibrating the IMU arrangement of the first aspect. The method comprises receiving (by processing circuitry of a computer system) a respective result of calibration measurements from each of the IMUs, wherein all the calibration measurements relate to a single angular orientation of the cluster. The method also comprises causing (by the processing circuitry) calibration of at least one of the IMUs by using the respective results from different ones of the IMUs as if the corresponding calibration measurements related to different angular orientations of a single IMU. The fifth aspect of the disclosure may seek to facilitate IMU calibration. A technical benefit may include that dynamic and/or automatic calibration is enabled. A technical benefit may include that calibration is not restricted to certain locations. A technical benefit may include that calibration can be performed without execution of elaborate positioning patterns.

According to a sixth aspect of the disclosure, a computer program product is provided, which comprises program code for performing, when executed by processing circuitry, the method of the fifth aspect. The sixth aspect of the disclosure may seek to convey program code for facilitate IMU calibration. A technical benefit may include that new IMU-equipped devices (e.g., vehicles) and/or legacy IMU-equipped devices (e.g., vehicles) may be conveniently configured, by software installation/update, to perform improved IMU calibration.

According to a seventh aspect of the disclosure, a non-transitory computer-readable storage medium is provided, which comprises instructions, which when executed by processing circuitry, cause the processing circuitry to perform the method of the fifth aspect. The seventh aspect of the disclosure may seek to convey program code for facilitate IMU calibration. A technical benefit may include that new IMU-equipped devices (e.g., vehicles) and/or legacy IMU-equipped devices (e.g., vehicles) may be conveniently configured, by software installation/update, to perform improved IMU calibration.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic drawing illustrating an IMU arrangement according to some examples.
**FIG. 2** is a schematic drawing illustrating a vehicle according to some examples.
**FIG. 3** is a flowchart illustrating a method according to some examples.
**FIG. 4** is a combined flowchart and signaling diagram illustrating method steps and corresponding signaling according to some examples.
**FIG. 5** is a schematic diagram illustrating a computer system for implementing examples disclosed herein, according to some examples.
**FIG. 6** is a schematic drawing illustrating a computer program product, in the form of a non-transitory computer-readable storage medium, according to some examples.
**FIG. 7** is a schematic block diagram of a control unit according to some examples.

### DETAILED DESCRIPTION

The detailed description set forth below provides information and examples of the disclosed technology with sufficient detail to enable those skilled in the art to practice the disclosure.

Even though the suggested approaches will be exemplified herein in relation to heavy-duty vehicles, it should be understood that the suggested approaches are equally applicable in relation to any IMU-equipped device(s) (e.g., other land-based vehicles, marine vehicles, aerial vehicles, construction equipment, industrial equipment, etc.).

As already mentioned, it may be desirable to facilitate IMU calibration. For example, it may be beneficial if the calibration can be performed anywhere and/or while a vehicle comprising the IMU is in use. Alternatively or additionally, it may be beneficial if the calibration can be automated and/or dynamically repeated. Yet alternatively or additionally, it may be beneficial if the calibration can be performed without the need for elaborate positioning patterns to be executed. Yet alternatively or additionally, it may be beneficial if the calibration can be kept up to date with changing conditions occurring during use of the IMU-equipped device.

To these and/or other end(s), alternative IMU arrangements and corresponding calibration approaches are suggested herein.

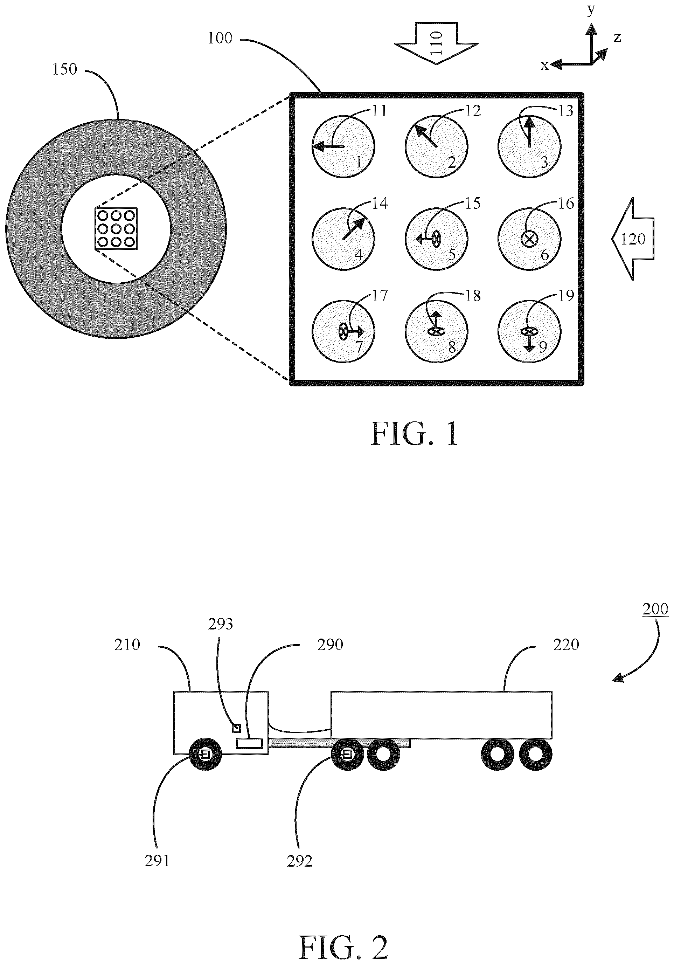

**FIG. 1** schematically illustrates an IMU arrangement **100** according to some examples. In the example of **FIG. 1**, the IMU arrangement **100** is positioned/mounted on/in a wheel **150**. More specifically, the IMU arrangement **100** is mounted at the center of the wheel **150** (e.g., within the wheel hub). However, it should be noted that the IMU arrangement **100** may generally be mounted at any suitable location on/in the wheel **150** (e.g., on/in the tire).

More generally, the IMU arrangement **100** may be mounted at any suitable location on/in a vehicle, or at any suitable location on/in another suitable device. Thus, even if the IMU arrangement **100** may, at least in some examples, be suitable for mounting on/in a wheel, this is not to be considered as liming regarding the possible use scenarios for the IMU arrangement **100**.

Placing the IMU arrangement at a center of rotation may entail benefits for the purpose of motion estimation, e.g., by minimizing effects of centrifugal forces and/or vibrations associated with wheel rotation.

The IMU arrangement **100** comprises a cluster of at least nine IMUs **1**, **2**, **3**, **4**, **5**, **6**, **7**, **8**, **9**. The IMUs can be of any suitable type of IMU, and are only schematically illustrated in **FIG. 1**.

The cluster of IMUs may be implemented together (i.e., the IMU arrangement **100** may be a single device) or the cluster of IMUs may be an aggregation of a two or more separate IMU devices (i.e., the IMU arrangement **100** may be an aggregation of two or more devices).

In the example of **FIG. 1**, the at least nine IMUs **1**, **2**, **3**, **4**, **5**, **6**, **7**, **8**, **9** are illustrated as mounted relative each other to form a 3x3 (quadratic) pattern in a single plane. It should be understood that this is not intended as limiting. Contrarily, the at least nine IMUs may be located relative each other in any suitable way (e.g., forming other patterns than a 3x3 quadratic pattern and/or extending in more - or less - than two dimensions).

Typically, the at least nine IMUs **1**, **2**, **3**, **4**, **5**, **6**, **7**, **8**, **9** are mounted relative each other such that a largest distance between any two of the at least nine IMUs is relatively small (e.g., shorter than a threshold value). This may reduce any calibration errors potentially introduced by using the respective calibration measurement results from different ones of the IMUs as if the corresponding calibration measurements related to different angular orientations of a single IMU. For example, a largest distance between any two of the at least nine IMUs may be smaller than a multiple (e.g., 3, 4, 5, 6, 7, 8, 9, 10, 11, 12, 13, 14, 15, 16, 17, or 18) of the size of a single IMU.

Each of the IMUs **1**, **2**, **3**, **4**, **5**, **6**, **7**, **8**, **9** has a respective angular orientation within the cluster. In **FIG. 1**, the respective angular orientations are illustrated by arrows **11**, **12**, **13**, **14**, **15**, **16**, **17**, **18**, **19**.

The example of **FIG. 1** shows that:
- IMU **2** has an angular orientation **12** which differs by 45 degrees in a clockwise direction from the angular orientation **11** of the IMU **1** when considering the side-view of the IMU arrangement **100** as illustrated in **FIG. 1**,
- IMU **3** has an angular orientation **13** which differs by 90 degrees in a clockwise direction from the angular orientation **11** of the IMU **1** when considering the side-view of the IMU arrangement **100** as illustrated in **FIG. 1**,
- IMU **4** has an angular orientation **14** which differs by 135 degrees in a clockwise direction from the angular orientation **11** of the IMU **1** when considering the side-view of the IMU arrangement **100** as illustrated in **FIG. 1**,
- IMU **5** has an angular orientation **15** which differs by 45 degrees in a clockwise direction from the angular orientation **11** of the IMU **1** when considering a top-view **110** of the IMU arrangement **100** (i.e., the arrow representing the angular orientation **15** points in a direction which is between the arrow representing the angular orientation **11** and a direction which is away from the viewer and perpendicular to a plane representing the side-view of the IMU arrangement **100** as illustrated in **FIG. 1**),
- IMU **6** has an angular orientation **16** which differs by 90 degrees in a clockwise direction from the angular orientation **11** of the IMU **1** when considering the top-view **110** of the IMU arrangement **100** (i.e., the arrow representing the angular orientation **16** points in a direction which is away from the viewer and perpendicular to the plane representing the side-view of the IMU arrangement **100** as illustrated in **FIG. 1**),
- IMU 7 has an angular orientation **17** which differs by 135 degrees in a clockwise direction from the angular orientation **11** of the IMU **1** when considering the top-view **110** of the IMU arrangement **100**,
- IMU **8** has an angular orientation **18** which differs by 45 degrees in a clockwise direction from the angular orientation **13** of the IMU **3** when considering a side-view **120** of the IMU arrangement **100** (i.e., the arrow representing the angular orientation **18** points in a direction which is between the arrow representing the angular orientation **13** and a direction which is away from the viewer and perpendicular to a plane representing the side-view of the IMU arrangement **100** as illustrated in **FIG. 1**), and
- IMU **8** has an angular orientation **18** which differs by 135 degrees in a clockwise direction from the angular orientation **13** of the IMU **3** when considering the side-view **120** of the IMU arrangement **100.**

Put differently, the angular orientations **11**, **12**, **13**, **14** represent **45** degree clockwise increments in an xy-plane (starting from **11**), the angular orientations **11**, **15**, **16**, **17** represent 45 degree clockwise increments in an xz-plane (starting from **11**), and the angular orientations **13**, **18**, **16**, **19** represent 45 degree clockwise increments in an yz-plane (starting from **13**).

All respective angular orientations (represented by **11**, **12**, **13**, **14**, **15**, **16**, **17**, **18**, **19**) among the IMUs **1**, **2**, **3**, **4**, **5**, **6**, **7**, **8**, **9** are (mutually) different. An angular orientation may be defined as a point in an angle space (e.g., having a reference orientation represented by origo). For example, the angle space may have one, two, or (typically) three dimensions.

This feature enables facilitated calibration. More particularly, this feature enables using the respective calibration measurement results from different ones of the IMUs as if the corresponding calibration measurements related to different angular orientations of a single IMU. Thereby, IMU calibration without the need for repositioning in different orientations may be enabled, and IMU calibration can be performed dynamically and automatically while the vehicle is used.

For example, the calibration measurement results pertaining to measurements by the IMUs **1**, **2**, **3**, **4**, **5**, **6**, **7**, **8**, **9** for a single angular orientation of the IMU arrangement **100** may be used as if a single IMU performed corresponding calibration measurements for angular orientations **11**, **12**, **13**, **14**, **15**, **16**, **17**, **18**, **19** of the single IMU.

It should be noted that the specific combination of respective angular orientations illustrated in **FIG. 1** is merely intended as an example, and numerous other suitable combinations of respective angular orientations may be equally useful.

When there are more than nine IMUs in the arrangement, all respective angular orientations may be mutually different or some respective angular orientations may coincide (as long as at least nine of them are mutually different).

Regardless of whether the IMU arrangement **100** is implemented as a single device or as an aggregation of two or more devices, the feature of mutually different respective angular orientations for at least nine of the IMUs may be achieved by firmly mounting the IMUs relative each other.

Typically, the respective angular orientations collectively span a three-dimensional angle space (i.e., together representing rotations in three mutually non-parallel - e.g., perpendicular - planes). For example, the respective angular orientations may synthesize IMU-excitation around three perpendicular axes.

Generally, it should be noted that the term "span" is used herein in the mathematical meaning that, if a plurality of elements (e.g., angular orientations) collectively span a space (e.g., a three-dimensional angle space), it is possible to select a full basis for the space among the plurality of elements.

This feature may be seen as a preferred way to enable facilitated calibration. More particularly, when using the respective calibration measurement results from different ones of the IMUs (to calibrate one or more of the IMUs) as if the corresponding calibration measurements related to (hypothetical) different angular orientations of a single IMU (to be calibrated), this feature enables collection of a set of measurements from a single angular orientation of the cluster which has the same potential for calibration as measurements collected from a repositioning session according to standard approaches for calibration.

In a typical example, IMU calibration uses at least nine calibration parameters (e.g., three scale factors, three misalignment angles, and three bias values). According to known approaches, effective estimation of these calibration parameters requires an IMU to undergo rotation in nine distinct and unknown stationary orientations. By incorporating a minimum of nine IMUs in an IMU arrangement, each with a unique orientation, as proposed herein the calibration parameters may be effectively estimated using a measurements for a single orientation instead.

Preferably, all of the at least nine IMUs **1**, **2**, **3**, **4**, **5**, **6**, **7**, **8**, **9** of the IMU arrangement **100** should be as close to identical as possible (apart from their respective angular orientations). This may reduce any calibration errors potentially introduced by using the respective calibration measurement results from different ones of the IMUs as if the corresponding calibration measurements related to different angular orientations of a single IMU. For example, each of the IMUs may represent an instantiation of a same/common/shared template IMU. Alternatively or additionally, the IMUs may be of a same type and/or may be produced under conditions that minimize manufacturing variations (e.g., in a same factory, by the same production line, in a same batch, during a limited time window, under otherwise similar conditions, etc.).

In a manufactured cluster of IMUs where the IMUs are produced together under similar conditions, more consistent variance can be observed in the errors of calibration parameters compared to individual IMUs. This may be due to the manufacturing process being designed to achieve some level of consistency and quality across the IMUs. Thus, it can be reasonably assumed that the error variation for each calibration parameter is consistent across all the IMUs in the cluster. For example, specification values (e.g., average and/or variance) for the calibration parameters may be provided by the manufacturer.

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner.

The tractor unit **210** and/or any of the trailer unit(s) **220** may comprise one or more IMU arrangement(s) **291**, **292**, **293** as described and exemplified herein (e.g., corresponding to the IMU arrangement **100** of **FIG. 1**).

Furthermore, the tractor unit **210** and/or any of the trailer unit(s) **220** may comprise a vehicle control unit (VCU) **290** configured to perform various vehicle control functions, such as vehicle motion management (VMM). For example, the VCU **290** may comprise the processing circuitry, which is described later herein.

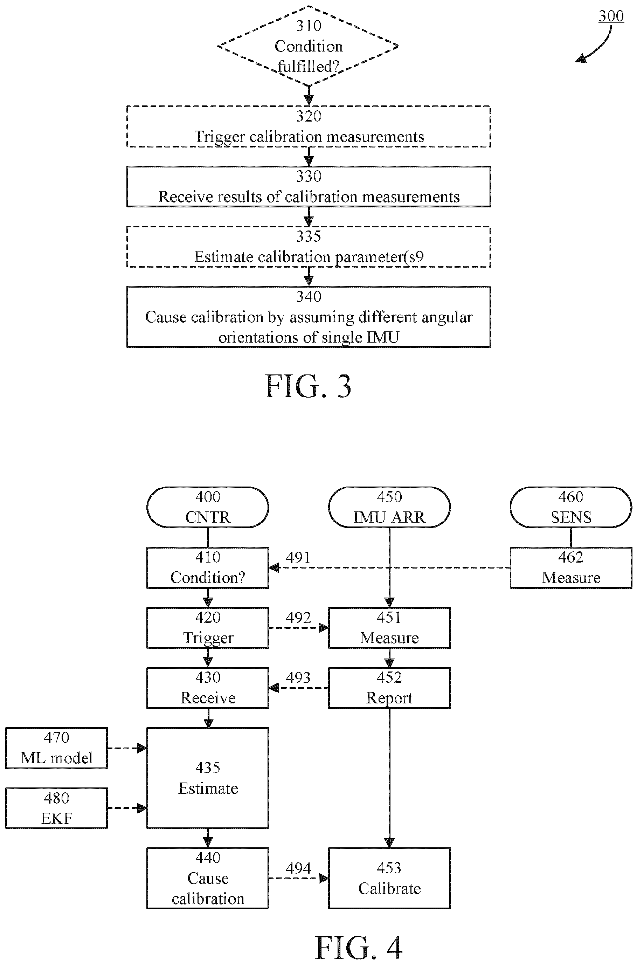

**FIG. 3** illustrates a method **300** according to some examples, for calibrating an IMU arrangement as described and exemplified herein (e.g., the IMU arrangement **100** of **FIG. 1**). The method **300** is a computer-implemented method. For example, the method **300** may be performed by processing circuitry of a computer system. Alternatively or additionally, the method **300** may be performed by a VCU (e.g., the VCU **290** of **FIG. 2**) or another suitable control unit of a vehicle.

As illustrated by **330**, the method **300** comprises receiving a respective result of calibration measurements from each of the IMUs, wherein all the calibration measurements relate to a single angular orientation of the cluster (i.e., of the IMU arrangement). For example, the calibration measurements may be performed during a time when the IMU arrangement remains in one single angular orientation (e.g., while the vehicle is at standstill). Typically, the calibration measurements may be performed simultaneously for all IMUs of the IMU arrangements.

The calibration measurements may be any measurements which are suitable for calibration (e.g., as known in the art). For example, the calibration measurements may comprise measurements for one or more IMU parameter(s), such as accelerometer measurements (e.g., linear accelerations in three dimensions) and gyroscope measurements (e.g., rotational velocities in three dimensions).

As illustrated by **340**, the method **300** also comprises causing (e.g., by control signaling to the IMU arrangement) calibration of at least one of the IMUs by using the respective results from different ones of the IMUs (to calibrate one or more of the IMUs) as if the corresponding calibration measurements related to (hypothetical) different angular orientations of a single IMU (to be calibrated).

The control signaling causing the calibration may be any control signaling which are suitable for calibration (e.g., as known in the art). For example, the control signaling may indicate one or more calibration parameter(s). Example calibration parameters include bias, misalignment, and scaling associated with adjustment of one or more of the IMU parameter(s) (e.g., three bias values, three misalignment values, and three scaling values).

For example, the (hypothetical) different angular orientations of a single IMU (to be calibrated) may relate mutually to each other as do the respective angular orientations of the IMU arrangement. Typically, the respective results from different ones of the IMUs may be used for calibration in the same manner as respective results of calibration measurements by a single IMU in different angular orientations would be used.

The use of the calibration measurements to cause the calibration may (apart from being collected by different IMUs for a single orientation of the cluster) be according to any approach suitable for calibration (e.g., as known in the art).

It should be noted that the calibration is not necessarily limited to a measurements at a single angular orientation of the cluster. To further improve the calibration, measurements may be performed by the IMUs of the IMU arrangement at one or more further angular orientation of the cluster and/or during one or more movement (angular or otherwise) of the cluster. For example, a vehicle at standstill may be prompted to undertake (automatically or by a request to the driver) a slight forward and/or backward roll to enable further calibration measurements to be collected.

As illustrated by **320**, the method **300** may optionally also comprise triggering (e.g., by control signaling to the IMU arrangement) the IMUs to perform the calibration measurements.

As illustrated by **310**, the triggering may optionally be responsive to a trigger condition being fulfilled. Thereby, the calibration may be automated and/or dynamically performed (only) when there is a need/possibility to do so.

Generally, any suitable trigger condition (or combination of conditions) may be applied.

For example, a trigger condition may be that a vehicle comprising the IMU arrangement is at standstill (i.e., the IMU arrangement is stationary, which may be beneficial for performing calibration measurements).

Alternatively or additionally, a trigger condition may be that a specific time has passed since a previous IMU calibration (i.e., calibration may be performed repeatedly - e.g., periodically - with some predetermined or dynamically changing time between calibration occasions).

Yet alternatively or additionally, a trigger condition may be that an age of the IMU arrangement exceeds a threshold value. Since aging may affect the characteristics of an IMU, it may be suitable to re-calibrate increasingly often as the IMU arrangement ages.

Yet alternatively or additionally, a trigger condition may be that a temperature change is detected (e.g., based on temperature measurements by a temperature sensor comprised in - or located close to - the IMU arrangement). Since a temperature change may affect the characteristics of an IMU, it may be suitable to re-calibrate when the temperature changes (e.g., more than a threshold value).

For example, utilizing a wheel-mounted IMU arrangement (e.g., for navigation, motion estimation, etc.) is typically susceptible to the influence of temperature fluctuations. The sensors embedded in each IMU (e.g., accelerometers, gyroscopes, etc.) may be sensitive to changes in temperature, thereby affecting their accuracy and overall performance. These temperature-induced variations typically impact internal sensor parameters (e.g., sensitivity, bias, noise, etc.), and calibration parameters may serve to offset these variations and improve IMU measurement accuracy. Subject to temperature changes, it may be beneficial to perform IMU recalibration repeatedly (e.g., periodically) to uphold IMU measurement accuracy.

As already mentioned, the use of the calibration measurements may be according to any approach suitable for calibration. For example, the method **300** may comprise estimating one or more calibration parameter(s), as illustrated by optional **335.** In some examples, a machine learning model and/or an extended Kalman filter is used to estimate the calibration parameter(s).

**FIG. 4** illustrates example method steps and corresponding signaling according to some examples, for calibrating an IMU arrangement as described and exemplified herein (e.g., the IMU arrangement **100** of **FIG**. **1**). The signaling is among devices including an IMU arrangement **450** (IMU ARR; e.g., the IMU arrangement **100** of **FIG**. **1**), a controller **400** (CNTR; e.g., the VCU **290** of **FIG. 2** and/or processing circuitry configured to perform one or more steps of the method **300** of **FIG. 3**), and (optionally) a sensor **460** (SENS; e.g., a temperature sensor).

As illustrated by **451**, each of the IMUs comprised in the IMU arrangement **450** performs calibration measurements, wherein all the calibration measurements relate to a single angular orientation of the cluster, and the respective results are reported to the controller **400**, as illustrated by **452**.

As illustrated by **430** (compare with **330** of **FIG. 3**), the respective results **493** are received by the controller **400**.

As illustrated by **435** (compare with **335** of **FIG. 3**), the controller **400** uses the respective results **493** to estimate one or more calibration parameter(s); possibly using a machine learning model **470** (ML model) and/or an extended Kalman filter **480** (EKF), as discussed later herein.

As illustrated by **440** (compare with **340** of **FIG. 3**), the controller **400** sends control signaling **494** to the IMU arrangement **450** to cause calibration **453** at the IMU arrangement **450** of at least one of the IMUs.

In **435** and/or **440,** the controller **400** uses the respective results **493** from different ones of the IMUs (to calibrate one or more of the IMUs) as if the corresponding calibration measurements related to (hypothetical) different angular orientations of a single IMU (to be calibrated).

As illustrated by **420** (compare with **320** of **FIG. 3**), the controller **400** may trigger the calibration measurements **451** by sending control signaling **492** to the IMU arrangement **450.**

As illustrated by **410** (compare with **310** of **FIG. 3**), the triggering **420** may be responsive to a trigger condition being fulfilled. For example, the trigger condition may be based on sensor data **491** relating to measurements **462** performed by the sensor **460.**

Generally, extended Kalman filter (EKF) is known to have relatively low complexity and relatively low computational requirements. Using EKF for calibration parameter estimation may offer benefits (e.g., in dynamic environments and applications that involve motion) as exemplified in the following.

For example, relating to real-time adaptation, EKF may provide a recursive and real-time adaptation of the calibration parameters based on incoming sensor measurements. In dynamic situations (e.g., where the IMU arrangement is in motion during use), calibration parameters may change due to factors like temperature variations and/or sensor aging. The EKF is beneficial since it is continuously updated, allowing the calibration parameters to adapt to changing conditions on the fly.

Alternatively or additionally, EKF may be designed for sensor fusion, enabling integration of IMU data with other sensor measurements (e.g., GPS, wheel encoders, etc.). By fusing data from multiple sensors, the EKF can improve the accuracy of the calibration estimates. This is particularly useful in applications where IMU measurements do not provide sufficient accuracy on their own (e.g., navigation, motion tracking, etc.).

Yet alternatively or additionally, EKF may be effective in dealing with non-linear system models, which is often the case in IMU calibration where the relationship between sensor measurements and calibration parameters can be non-linear. Traditional calibration methods may rely on linear approximations, while EKF can handle more complex relationships, providing a more accurate representation of the calibration process.

Yet alternatively or additionally, EKF may support online calibration, allowing for continuous refinement of calibration parameters during operation. In applications where the environment or sensor characteristics change over time, online calibration is advantageous. The EKF enables the IMU arrangement to adapt to evolving conditions without the need for frequent manual recalibration.

Yet alternatively or additionally, EKF can be robust to measurement noise, filtering out noisy sensor readings to provide more accurate parameter estimates. IMU readings can be affected by noise and/or disturbances. The ability of the EKF to handle noisy data contributes to ensuring that calibration estimates are not overly influenced by transient fluctuations.

Generally, machine learning models are known to be able to learn complex relationships. For example, machine learning models may be used for the relationships between IMU data (i.e., data resulting from calibration measurements) and calibration parameters. A machine learning model may learn the relationships for different speeds, different temperatures, different applications, etc. This renders the machine learning model adaptable to changing conditions. Using machine learning for calibration parameter estimation may offer benefits (e.g., in dynamic environments and applications that involve motion) as exemplified in the following

For example, machine learning may capture complex and non-linear relationships between IMU measurements and calibration parameters. IMU calibration typically involves intricate dependencies. Machine learning models, such as neural networks, can adapt to these complex dependencies, potentially offering more accurate representations of the calibration process.

Alternatively or additionally, machine learning models may adapt to unknown and/or changing dynamics without explicit knowledge of the underlying system. In dynamic environments, the relationship between IMU readings and calibration parameters may vary over time. Machine learning models can continuously adapt to these changes without requiring predefined models for every possible scenario.

Yet alternatively or additionally, machine learning approaches may allow for data-driven calibration, learning directly from the IMU data rather than relying on predefined models. Traditional calibration methods often rely on assumptions and/or predefined models. Machine learning models can learn from the actual data, making them more flexible and capable of capturing subtle patterns that may be challenging to model explicitly.

Yet alternatively or additionally, machine learning may be suitable for integrating data from multiple sensors, facilitating sensor fusion for enhanced calibration accuracy. In many applications, IMUs are part of sensor suites that include other sensors as well (e.g., cameras, GPS, etc.). Machine learning models can effectively fuse data from different sources, leveraging the strengths of each sensor to improve overall calibration accuracy.

Yet alternatively or additionally, machine learning approaches may require fewer assumptions about the physical model of the system. Traditional calibration methods often rely on explicit knowledge of the physical characteristics of the IMU and its interaction with the environment. Machine learning can discover patterns and relationships without the need for a detailed understanding of the underlying physics.

Yet alternatively or additionally, machine learning models may support online learning, enabling continuous adaptation to changing conditions. As the system operates, machine learning models can update and refine their calibration estimates in real-time, making them suitable for applications where the calibration parameters may change over time.

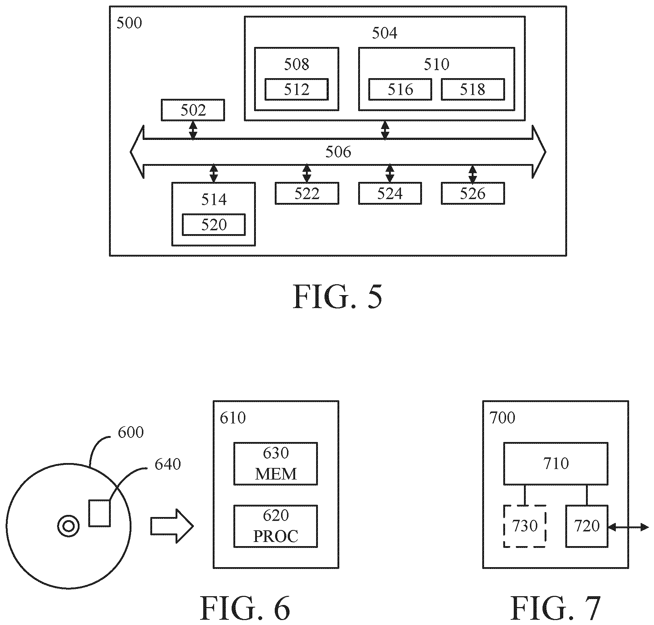

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product exemplified as a non-transitory computer-readable medium in the form of a compact disc (CD) ROM **600.** The computer-readable medium has stored thereon program code **640** comprising instructions. The program code is loadable into processing circuitry (PROC; e.g., a data processing unit) **620,** which may, for example, be comprised in a device **610,** such as a VCU. When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **200** (e.g., in the form of a VCU **290**). Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as any of the methods discussed in connection to **FIGs. 3** and **4****.**

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for an articulated vehicle **200** comprising a tractor **210** and/or one or more towed vehicle units **220,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

### A non-exhaustive list of examples:

**Example 1:** An inertial measurement unit, IMU, arrangement comprising a cluster of at least nine IMUs, wherein each of the IMUs has a respective angular orientation within the cluster, and wherein all respective angular orientations among the IMUs are different.

**Example 2:** The IMU arrangement of **Example 1,** wherein each of the IMUs represents an instantiation of a same template IMU.

**Example 3:** The IMU arrangement of any of **Examples 1-2,** wherein the respective angular orientations collectively span a three-dimensional angle space.

**Example 4:** A computer system for calibration of the inertial measurement unit, IMU, arrangement of any of **Examples 1-3,** the computer system comprising processing circuitry configured to: receive a respective result of calibration measurements from each of the IMUs, wherein all the calibration measurements relate to a single angular orientation of the IMU arrangement, and cause calibration of at least one of the IMUs by using the respective results from different ones of the IMUs as if the corresponding calibration measurements related to different angular orientations of a single IMU.

**Example 5:** The computer system of **Example 4,** wherein the processing circuitry is further configured to trigger the IMUs to perform the calibration measurements.

**Example 6:** The computer system of **Example 5,** wherein the processing circuitry is configured to trigger the IMUs to perform the calibration measurements responsive to a trigger condition being fulfilled.

**Example 7:** The computer system of **Example 6,** wherein the trigger condition comprises one or more of: a vehicle comprising the IMU arrangement being at standstill, a specific time having passed since a previous IMU calibration, a temperature change being detected, and an age of the IMU arrangement exceeding a threshold value.

**Example 8:** The computer system of any of **Examples 4-7,** wherein the processing circuitry is further configured to estimate one or more calibration parameter(s).

**Example 9:** The computer system of **Example 8,** wherein the processing circuitry is configured to use a machine learning model to estimate the calibration parameter(s).

**Example 10:** The computer system of **Example 8,** wherein the processing circuitry is configured to use an extended Kalman filter to estimate the calibration parameter(s).

**Example 11:** A wheel for a vehicle, wherein the wheel comprises the inertial measurement unit, IMU, arrangement of any of **Examples 1-3.**

**Example 12:** A vehicle comprising the inertial measurement unit, IMU, arrangement of any of **Examples 1-3,** and/or the computer system of any of **Examples 4-10,** and/or the wheel of **Example 11.**

**Example 13:** A computer-implemented method for calibrating the inertial measurement unit, IMU, arrangement of any of **Examples 1-3,** the method comprising: receiving (by processing circuitry of a computer system) a respective result of calibration measurements from each of the IMUs, wherein all the calibration measurements relate to a single angular orientation of the cluster; and causing (by the processing circuitry) calibration of at least one of the IMUs by using the respective results from different ones of the IMUs as if the corresponding calibration measurements related to different angular orientations of a single IMU.

**Example 14:** The method of **Example 13,** further comprising triggering (by the processing circuitry) the IMUs to perform the calibration measurements.

**Example 15:** The method of **Example 14,** wherein triggering the IMUs to perform the calibration measurements is performed responsive to a trigger condition being fulfilled.

**Example 16:** The method of **Example 15,** wherein the trigger condition comprises one or more of: a vehicle comprising the IMU arrangement being at standstill, a specific time having passed since a previous IMU calibration, a temperature change being detected, and an age of the IMU arrangement exceeding a threshold value.

**Example 17:** The method of any of **Examples 13-16,** further comprising estimating (by the processing circuitry) one or more calibration parameter(s).

**Example 18:** The method of **Example 17,** wherein a machine learning model is used to estimate the calibration parameter(s).

**Example 19:** The method of **Example 17,** wherein an extended Kalman filter is used to estimate the calibration parameter(s).

**Example 20:** A computer program product comprising program code for performing, when executed by processing circuitry, the method of any of **Examples 13-19.**

**Example 21:** A non-transitory computer-readable storage medium comprising instructions, which when executed by processing circuitry, cause the processing circuitry to perform the method of any of **Examples 13-19.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An inertial measurement unit, IMU, arrangement (100, 291, 292, 293, 450) comprising a cluster of at least nine IMUs (1, 2, 3, 4, 5, 6, 7, 8, 9), wherein each of the IMUs has a respective angular orientation (11, 12, 13, 14, 15, 16, 17, 18, 19) within the cluster, and wherein all respective angular orientations among the IMUs are different.

2. The IMU arrangement of claim 1, wherein each of the IMUs represents an instantiation of a same template IMU.

3. The IMU arrangement of any of claims 1-2, wherein the respective angular orientations collectively span a three-dimensional angle space.

4. A computer system (290, 400, 500) for calibration of the inertial measurement unit, IMU, arrangement (100, 291, 292, 293, 450) of any of claims 1-3, the computer system comprising processing circuitry configured to:
receive (330, 430) a respective result (493) of calibration measurements (451) from each of the IMUs, wherein all the calibration measurements relate to a single angular orientation of the IMU arrangement; and
cause (340, 440) calibration (453) of at least one of the IMUs by using the respective results from different ones of the IMUs as if the corresponding calibration measurements related to different angular orientations of a single IMU.

5. The computer system of claim 4, wherein the processing circuitry is further configured to trigger (320, 420) the IMUs to perform the calibration measurements.

6. The computer system of claim 5, wherein the processing circuitry is configured to trigger the IMUs to perform the calibration measurements responsive to a trigger condition (310, 410) being fulfilled.

7. The computer system of claim 6, wherein the trigger condition comprises one or more of:
a vehicle comprising the IMU arrangement being at standstill;
a specific time having passed since a previous IMU calibration;
a temperature change being detected; and
an age of the IMU arrangement exceeding a threshold value.

8. The computer system of any of claims 4-7, wherein the processing circuitry is further configured to estimate (335, 435) one or more calibration parameter(s).

9. The computer system of claim 8, wherein the processing circuitry is configured to use a machine learning model (470) to estimate the calibration parameter(s).

10. The computer system of claim 8, wherein the processing circuitry is configured to use an extended Kalman filter (480) to estimate the calibration parameter(s).

11. A wheel (150) for a vehicle, wherein the wheel comprises the inertial measurement unit, IMU, arrangement of any of claims 1-3.

12. A vehicle (200) comprising the inertial measurement unit, IMU, arrangement of any of claims 1-3, and/or the computer system of any of claims 4-10, and/or the wheel of claim 11.

13. A computer-implemented method (300) for calibrating the inertial measurement unit, IMU, arrangement of any of claims 1-3, the method comprising:
receiving (330), by processing circuitry of a computer system, a respective result of calibration measurements from each of the IMUs, wherein all the calibration measurements relate to a single angular orientation of the cluster; and
causing (340), by the processing circuitry, calibration of at least one of the IMUs by using the respective results from different ones of the IMUs as if the corresponding calibration measurements related to different angular orientations of a single IMU.

14. A computer program product (600) comprising program code for performing, when executed by processing circuitry, the method of claim 13.

15. A non-transitory computer-readable storage medium (600) comprising instructions, which when executed by processing circuitry, cause the processing circuitry to perform the method of claim 13.
